# EUROPEAN PATENT APPLICATION

(11) **EP 3 936 842 A1**
(43) Date of publication of application: **12.01.2022**
(21) Application number: 20184220.0
(22) Date of filing: 06.07.2020
(51) Int. Cl.: G01J 3/44, G01J 3/02, G01N 21/65

(54) **LIGHT TRANSMISSION SYSTEM FOR DELIVERING LIGHT TO A RAMAN SPECTROMETER**

(71) Applicant: Imec VZW, 3001 Leuven (BE)
(72) Inventor: ZINOVIEV, Kirill, 3001 Leuven (BE); VAN DORPE, Pol, 3001 Leuven (BE)
(74) Representative: AWA Sweden AB

(57) **Abstract**

According to an aspect of the present inventive concept there is provided a light transmission system (100, 200) for delivering light to a Raman spectrometer (20), the system comprising:
a homogenizer (110, 510) with an entrance surface (112, 512) having an entrance height and an entrance width, an exit surface (114, 514) having an exit height and an exit width, and wherein the exit height is of a larger size than the entrance height; and
wherein the homogenizer (110, 510) is configured to receive, at the entrance surface (112, 512), light from a bundle (210) of optical fibers (220) and wherein each fiber (220) in the bundle (210) defines an entrance divergence angle of light; and
wherein the homogenizer (110, 510) is configured to transmit light such that an exit divergence angle of light, in a plane parallel with a direction of the exit height, is smaller than the entrance divergence angle of light, in a plane parallel with a direction of the entrance height.

## Description

### Technical field

The present inventive concept generally relates to the field of Raman spectroscopy, and more specifically to a light transmission system for delivering light to a Raman spectrometer.

### Background

Raman spectroscopy is a spectroscopic technique that involves inelastic scattering of light in the molecular species of a sample. The vibrational energy states of the molecules cause a wavelength shift of the scattered light, which is unique to each type of molecular species. Since the technique does not pose any requirement on a specific wavelength of the excitation source, Raman spectroscopy is versatile in that it may provide measurement results for several molecular species simultaneously, and is therefore suitable for measurement of e.g. species concentration or chemical composition of samples, and is applied in many different fields. In medical applications, Raman spectroscopy may provide information about molecular composition and concentrations in cells or biofluids also *in vivo.* One such medical application is measurement of glucose.

Raman scattering, however, is a very weak process and Raman light is typically weak compared to other possible types of light that may occur in optical diagnostics, such as elastic (Rayleigh and Mie) scattering, induced fluorescence, induced incandescence, or ambient light. At least part of this problem may be overcome in a large technical laboratory by increasing the power, and thus size and cost, of the excitation source. However, for medical applications involving living patients, a more compact and cost-efficient solution is desirable. It is thus of importance that most, and preferably all, Raman light collected is also efficiently coupled to the detector, while removing other light.

Referring to prior art, Chae-Ryon Kong et al., "A novel non-imaging optics based Raman spectroscopy device for transdermal blood analyte measurement", AIP Advances 1, pages 1-13, 032175, 2011, suggests a system in which excitation is provided on one side of the sample, and a hollow collimating component in combination with a lens is used for collecting light from the other side of the sample. Another example is Jan Lipson et al., "Requirements for Calibration in Noninvasive Glucose Monitoring by Raman Spectroscopy", Journal of Diabetes Science and Technology, Volume 3, Issue 2, pages 233-241, 2009, suggesting a system with excitation and collection from the same side of the sample, using a lens for collection of light which is then directed to a spectrometer. However, with the solutions discussed by Chae-Ryon Kong et al. and Jan Lipson et al. there is still a need in the art for improvements of the solutions for Raman spectroscopy.

### Summary

An objective of the present inventive concept is to provide a light transmission system for Raman spectroscopy, presenting high collection efficiency and high throughput of Raman light to the spectrometer, by low losses. At least for some embodiments, it is a further objective to provide an efficient filtering solution, for efficiently removing excitation light from the collected light transmitted to the spectrometer, to improve signal-to-noise ratio. It is yet a further objective to provide a compact solution for Raman spectroscopy.

These and other objectives are at least partly met by the invention as defined in the independent claims. Preferred embodiments are set out in the dependent claims.

According to a first aspect of the present inventive concept there is provided a light transmission system for delivering light to a Raman spectrometer, said light transmission system comprising:
a homogenizer comprising an entrance surface and an exit surface, the entrance surface having an entrance height and an entrance width, wherein the entrance height and the entrance width are of different sizes, the exit surface having an exit height and an exit width, wherein the exit height and the exit width are of different sizes, and wherein the exit height is of a larger size than the entrance height; and
wherein the homogenizer defines an optical path for propagation of light from the entrance surface to the exit surface;
wherein the homogenizer is configured to receive, at the entrance surface, light from a bundle of optical fibers and wherein each fiber in the bundle of fibers defines an entrance divergence angle of light received at the entrance surface; and
wherein the homogenizer is configured to transmit light such that an exit divergence angle of light exiting at the exit surface, in a plane perpendicular to the exit surface and parallel with a direction of the exit height, is smaller than the entrance divergence angle of light, in a plane perpendicular to the entrance surface and parallel with a direction of the entrance height, such that the exit divergence angle is adapted to an acceptance angle of a detector of the Raman spectrometer.

By the term "Raman spectrometer" is here meant any unit or device capable of receiving Raman scattered light, dispersing the light by wavelength and detect the resulting wavelength spectrum. Raman scattering typically occurs when excitation light excites molecules in a sample from a first vibrational energy state to a virtual energy state, after which the molecules relax to a second vibrational energy state, wherein the second vibrational energy state is different from the first vibrational energy state. In this manner the molecules may either gain or lose vibrational energy resulting in a wavelength shift of the scattered light with respect to the excitation light. The composition of the sample and the molecular structure therein provide a wavelength spectrum with a number of peaks, in which the wavelength position of the peaks, the number of peaks, and the relative intensity of the peaks provides a finger print of the molecular composition of the sample. Given as an example, the source of excitation light may be a laser. However, it should be understood that also other sources of excitation light are conceivable.

By way of example, the Raman spectrometer may be, but is not limited to, of the type described in EP2913663, which is incorporated in its entirety herein by reference. In particular, the Raman spectrometer described in EP2913663 comprises a beam shaper for distributing collimated light over a discrete number of line shaped fields, and a spectrometer chip wherein the spectrometer chip is adapted for processing the light in a discrete number of line shaped fields coming from the beam shaper. Given as another non-limiting example, the Raman spectrometer may be of a type comprising a dispersive grating or prism for dispersing the light. Given as yet another non-limiting example, the Raman spectrometer may be of a type comprising an imaging detector, such as a charge-coupled device (CCD) sensor or a complementary metal-oxide-semiconductor (CMOS) sensor.

By the term "homogenizer" is here meant an optical component configured to receive light at an entrance end, transport light from the entrance end to an exit end at which light exits the homogenizer, the homogenizer being further configured in such a way that the divergence angle of light exiting the homogenizer is different from the divergence angle entering the homogenizer. Given as an example, the divergence angle in the height direction may be reduced at the exit surface compared to the divergence angle at the entrance surface, in order to ensure that light exiting the homogenizer has a divergence angle in the height direction which is not larger than the acceptance angle of the detector of the Raman spectrometer. Given as another example, the divergence may be reduced in one direction and increased in another direction.

The homogenizer may be a solid piece made of an optically transparent material such that light may travel through the material. It is conceivable that the homogenizer may alternatively be a hollow piece made of an optically transparent material such that light can travel through the piece. A hollow homogenizer may have one or more open ends or it may have closed ends only. An interior of the hollow piece may be filled with a gas such as air, or a liquid, or it may be provided with a vacuum.

By way of example, the material of which the homogenizer is made may be, but is not limited to, glass, BK7, fused silica, quartz, sapphire, or any other suitable optical material.

By the term "optical path" is here meant a path which is a main direction of propagation of the light. It should be understood that because the light collected has a divergence, individual rays of light may have slightly different directions. However, the main propagation direction is the direction in which the rays in the light collected travel together, on average.

Further, it should be understood that the optical path in the homogenizer may be a straight line through the homogenizer, or it may be a path along which the light takes one or more turns. Hence, the main direction of propagation at the entrance surface may be the same as at the exit surface, or it may be different. Consequently, the entrance surface may be parallel to the exit surface, or it may be non-parallel.

An advantage of the present inventive concept is that high transmittance of the Raman light is achieved. Raman light is typically weak compared to other possible types of light that may occur in optical diagnostics, such as elastic (Rayleigh and Mie) scattering, induced fluorescence, induced incandescence, or ambient light. It is thus of importance that most, and preferably all, Raman light collected is also efficiently coupled to the detector. The homogenizer as described above is configured for shaping and homogenizing the Raman light such that it matches the acceptance requirements of the detector of a Raman spectrometer. In this manner, a light transmission system capable of transmitting all light entering the entrance surface and delivering it to the Raman spectrometer in a form such that most, and possibly all, light may be coupled into the detector of the Raman spectrometer.

Another advantage is that homogenizer increases the uniformity of light prior to the light entering the Raman spectrometer.

According to an embodiment, the light transmission system may further comprise a bundle of optical fibers, each optical fiber of the bundle of optical fibers comprising a transmitting end, wherein the transmitting ends of the optical fibers may be arranged in a configuration adapted to a shape of the entrance surface such that light from each optical fiber is received by the homogenizer at the entrance surface.

By the term "bundle of optical fibers" is here meant multiple optical fibers that may be glued or fused together at the ends, such that the optical fibers together in the bundle may form a flexible optical cable. Alternatively, a relation of the fibers in the bundle of optical fibers may be controlled at the ends by a clamp or other device holding the optical fibers together. Each fiber of the bundle of optical fibers comprise a receiving end and a transmitting end. The receiving ends may be arranged alongside each other so as to form a receiving surface comprising the receiving ends of the individual optical fibers. The transmitting ends may be arranged alongside each other so as to form a transmitting surface comprising the transmitting ends of the individual optical fibers. The bundle of optical fibers may be applied for guiding Raman light induced in a sample to the entrance surface of the homogenizer.

By way of example, the entrance surface of the homogenizer may have a rectangular shape and the transmitting ends of the fibers may be arranged in a configuration having a rectangular shape or a similar shape such that all the transmitting ends of the fibers fit within an area defined by the entrance surface of the homogenizer.

An advantage of this embodiment is that it allows light transmitted from all the fibers in the bundle of fibers to propagate through the entrance surface and into the homogenizer. Thus, in the manner described, a light transmission system with a further improved light transmission efficiency may be provided.

According to an embodiment, each optical fiber of the bundle of optical fibers further may comprise a receiving end configured to receive light, and wherein the receiving ends of the optical fibers may be arranged in a circular configuration.

In case collection of Raman light from the sample is made by means of circularly shaped optics, the throughput of collected Raman light to the bundle of fibers may also be distributed over a circular cross-section.

An advantage with the embodiment of the bundle of fibers wherein the receiving ends of the optical fibers are arranged in a circular configuration is that it may match the circular cross-section over which Raman light is distributed when reaching the receiving end of the bundle of fibers, and thereby enable coupling of most, or possibly all, Raman light being transmitted to the receiving end of the bundle of optical fibers.

According to an embodiment, the transmitting ends of the optical fibers and the receiving ends of the optical fibers may be arranged in different configurations.

By the term "different configurations" is here meant that the configurations in which the transmitting and the receiving ends are arranged in respectively, may be of different geometrical shapes. Given av a non-limiting example, the receiving ends may be arranged in a circular shape whereas the transmitting ends may be arranged in a rectangular shape. It should however be realized that the configurations are not limited to these shapes, but may rather have any combination of geometrical shapes.

An advantage with this embodiment is that collected Raman light may be reshaped depending on the needs of e.g. an optical head collecting Raman light and a Raman spectrometer. In other words, the light transmission system is not dependent of the geometrical configuration of optics on either a receiving side or a transmitting side of the light transmission system. By the present arrangement, a more versatile light transmission system that may fit to a number of different combinations of optical heads and Raman spectrometers, may be provided.

According to an embodiment, the receiving end of each of the optical fibers may have an acceptance angle of at least 20 degrees, such that light with an angle of incidence to the receiving end less than or equal to the acceptance angle may be transmitted through the fiber, and light with an angle of incidence to the receiving end larger than the acceptance angle may be rejected by the fiber.

By the term "acceptance angle" is here meant the largest angle of incidence of a ray of light, with respect to a normal of the receiving end of the optical fiber, that allows the incident light to be guided by a core of the optical fiber.

An advantage with this embodiment is that the optical fibers may accept Raman light from a range of angles that may match the divergence angles of Raman light transmitted to the receiving end of the bundle of optical fibers. Thus, most, and possibly all, Raman light may be coupled into the optical fibers and thereby be guided through the light transmission system. A light transmission system having optical fibers with narrow acceptance angles may risk discarding a large portion of Raman light, thereby decreasing the quality of the Raman analysis.

According to an embodiment, the receiving end of each of the optical fibers may have an acceptance angle of not more than 40 degrees, such that light with an angle of incidence to the receiving end less than or equal to the acceptance angle may be transmitted through the fiber, and light with an angle of incidence to the receiving end larger than the acceptance angle may be rejected by the fiber.

Raman light collected by an optical head may be directed to e.g. an output at which the light transmission system may be arranged to receive Raman light and guide Raman light to the Raman spectrometer. The divergence angle of Raman light directed to such an output may typically be smaller than the acceptance angle of the optical fibers. However, background light or stray light may be scattered in all directions.

An advantage with this embodiment is that the acceptance angle of the optical fibers also functions as a filter, discarding background light or stray light reaching the receiving ends of the optical fibers at a larger angle than the acceptance angle. In this manner a light transmission system delivering a cleaner light signal to the spectrometer may be provided. In particular, excitation light may be prevented from entering the receiving ends of the optical fibers.

According to an embodiment, the homogenizer may be configured to provide an exit divergence angle which is less than or equal to 50% of the entrance divergence angle, and preferably less than or equal to 35 % of the entrance divergence angle.

According to an embodiment, the homogenizer may be configured to provide an exit divergence angle which is less than or equal to 25% of the entrance divergence angle.

An advantage with these embodiments is that the light transmission system may deliver light with a divergence angle that matches the acceptance angle of the Raman spectrometer, thereby ensuring that most, and possibly all, Raman light is coupled into the Raman spectrometer.

According to an embodiment, the homogenizer may further comprise one or more side surfaces, and wherein the one or more side surfaces may be configured so as to allow propagation of light from the entrance surface to the exit surface by total internal reflection of light at the one or more side surfaces.

By way of example, the light transmission system may be configured such that a refraction index of the homogenizer in relation to a refraction index of an ambience to the homogenizer provides a total internal reflection of light at the one or more side surfaces for light propagating from the entrance surface to the exit surface. The ambience may be, but is not limited to, air.

An advantage with this embodiment is that the homogenizer may be manufactured using a simple production process at a low cost, in comparison to alternative embodiments wherein the one or more side surfaces need to be provided with a reflective coating.

According to an embodiment, the homogenizer may further comprise one or more side surfaces, and wherein at least one of the one or more side surfaces is provided with a reflective coating.

It should be understood that the homogenizer may be configured in a number of different manners with different combinations of features. By way of example, the homogenizer may be a solid piece made of an optically transparent material in which reflection is achieved by total internal reflection, or it may be a solid piece with a reflective coating on at least one of the one of more side surfaces. By way of further example, the homogenizer may be a hollow piece in which reflection is achieved by total internal reflection, or it may be a solid piece with a reflective coating on at least one of the one of more side surfaces.

According to an embodiment, at least one of the entrance surface and the exit surface of the homogenizer may be provided with a glue, said glue having a refractive index which is equal to a refractive index of the homogenizer, such that refraction of light is minimized when light passes between the homogenizer and the glue.

According to an embodiment, said glue has a refractive index which is substantially equal to a refractive index of the homogenizer. For instance, the refractive index of glue may be within a tolerance range of +/- 5% with respect to the refractive index of a light propagation medium of the homogenizer.

An advantage with this embodiment is that if refraction is minimized, light may be more efficiently coupled to the entrance surface and/or from the exit surface of the homogenizer.

According to an embodiment, at least one of the entrance surface and the exit surface of the homogenizer may be provided with an anti-reflective coating.

An advantage with this embodiment is that loss of Raman light is reduced or eliminated for Raman light passing through the entrance surface or the exit surface.

According to an embodiment, the homogenizer may have a shape of a trapezoidal prism.

An advantage with this embodiment is that the homogenizer may have a relatively simple shape which may facilitate manufacturing of the homogenizer.

According to an embodiment, the homogenizer may be tapered in a direction of the width towards the exit surface, such that the entrance width is of a larger size than the exit width, the homogenizer thereby being configured to transmit light such that an exit divergence angle of light exiting at the exit surface, in a plane perpendicular to the exit surface and parallel with a direction of the exit width, is larger than the entrance divergence angle of light, in a plane perpendicular to the entrance surface and parallel with a direction of the entrance width, such that the exit divergence angle is further adapted to the acceptance angle of the detector of the Raman spectrometer.

In the manner described above, the homogenizer may be configured in such a way that the divergence angle in the width direction may be increased at the exit surface compared to the divergence angle at the entrance surface. Increasing the exit divergence angle may ensure that light exiting the homogenizer has a divergence angle in the width direction which better matches the acceptance angle of the detector of the Raman spectrometer. By increasing the exit divergence angle, a light transmission system that utilizes a larger portion of the acceptance angle of the detectors on the spectrometer chip may be provided.

According to a second aspect of the present inventive concept there is provided an illumination and light collection system for a Raman spectrometer, the illumination and light collection system comprising:
a light transmission system according to the first aspect of the present inventive concept;
an optical head, optically coupled to the light transmission system, and configured for guiding excitation light to a sample from which Raman light is consequently emitted, for collecting the Raman light and directing the collected Raman light along an optical collection path, for filtering out the excitation light from the optical collection path, and for coupling the collected Raman light in the optical collection path into the light transmission system.

The optical head may be configured to illuminate and collect Raman light from a sample positioned outside the optical head. Typically, the sample may be positioned such that the optical head is in physical contact with the sample during a Raman measurement, however it is conceivable that a Raman measurement may also be carried out without physical contact between the optical head and the sample. It is further conceivable that the sample may be positioned inside the optical head during a Raman measurement.

The optical head and the light transmission system may be modular units that may be detachable from each other. The optical head and the light transmission system may alternatively be integrated into a single unit.

A source of excitation light may be comprised in the optical head, or it may alternatively be external to the optical head. By way of example, excitation light from an external source of excitation light may be coupled into the optical head by means of an optical fiber or mirrors, or a combination thereof.

According to an embodiment, the optical head may further comprise a collimating reflector arranged to collect the Raman light emitted from a sample into a hemisphere with a solid angle of 2π srad and directing the collected Raman light along the optical collection path.

By the term "collimating reflector" is here meant any optical component having a large acceptance angle at an entrance and a smaller angular divergence at an exit. The cross-sectional area of light output from the collimating reflector is typically of a circular shape. However, it is conceivable that the cross-sectional area of the light output may have also other geometrical shapes. By way of example, the cross-sectional area of the light output may be of a rectangular, squared or elliptical shape.

An advantage with this embodiment is that it may enable the optical head to efficiently collect Raman light from a large solid angle, thereby ensuring a good signal-to-noise ratio.

According to an embodiment, the collimating reflector may be a compound parabolic concentrator, said compound parabolic concentrator being hollow and coated with a material of high reflectivity for at least one wavelength range.

According to an embodiment, the optical head may further comprise projection optics arranged for projecting the Raman light, collected by the collimating reflector, along the optical collection path and for coupling the collected Raman light into the light transmission system, such that a divergence angle of the collected Raman light, when reaching the light transmission system, is smaller than or equal to an acceptance angle of the light transmission system.

By the term "projection optics" is here meant any set of optical components arranged for projecting light along the optical collection path and for coupling light into the light transmission system. Projection optics may be a single optical component, or it may be a combination of more than one optical component. Given as a non-limiting example, the projection optics may comprise two lenses, arranged for imaging the exit of the Raman light from the sample onto a receiving end of the light transmission system. Given as another non-limiting example, the projections optics may comprise one or more mirrors.

An advantage with the projection optics in combination with the collimating reflector is that Raman light may be efficiently collected from the sample and coupled into the light transmission system.

According to an embodiment, the optical head may further comprise at least one filter set for filtering out excitation light from the optical collection path, the at least one filter set comprising an interference filter configured to block excitation light having an angle of incidence, with respect to a normal of the interference filter, smaller than or equal to at least the acceptance angle of the optical fibers.

Scattering of excitation light may occur in the optical head. By way of example, excitation light may scatter on the sample, on optical components or on walls of the optical head. By the present arrangement, excitation light of angles larger than the acceptance angle of the optical fibers may to some extent pass though the filter set. However, when reaching the receiving end of the bundle of optical fibers such light is rejected by the optical fibers and thus not transmitted through the light transmission system.

In other words, the combination of optical fibers and at least one interference filter configured to block excitation light of at least all angles up to the acceptance angle of the optical fibers, is an effective combination for filtering out excitation light from the optical path of Raman light.

According to an embodiment, the optical head may be configured for guiding excitation light such that excitation light reaches the sample from a side being the same as a side from which Raman light is collected.

An advantage with this embodiment is that it allows for the illumination and light collection system to be made compact.

Effects and features of the second aspect are largely analogous to those described above in connection with the first aspect. Embodiments mentioned in relation to the first aspect are largely compatible with the second aspect. It is further noted that the inventive concepts relate to all possible combinations of features unless explicitly stated otherwise. A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Other objectives, features and advantages of the present inventive concept will appear from the following detailed disclosure, from the attached claims as well as from the drawings.

### Brief description of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Figs 1a-1b illustrate a light transmission system for delivering light to a Raman spectrometer, the light transmission system comprising a homogenizer.
Fig. 2 illustrates a light transmission system for delivering light to a Raman spectrometer, the light transmission system comprising a homogenizer and a bundle of optical fibers.
Fig. 3 illustrates an illumination and light collection system for a Raman spectrometer, the system comprising an optical head and a light transmission system.
Fig. 4 illustrates the details of the optical head for exciting a sample, the sample consequently emitting Raman light, and for collecting and coupling the Raman light into the light transmission system delivering light to the Raman spectrometer.
Figs 5a-5b illustrate an alternative homogenizer.

### Detailed description

In cooperation with attached drawings, the technical contents and detailed description of the present inventive concept are described thereinafter according to a preferable embodiment, being not used to limit the claimed scope. This inventive concept may be embodied in many different forms and should not be construed as limited to the embodiments set forth herein; rather, these embodiments are provided for thoroughness and completeness, and fully convey the scope of the inventive concept to the skilled person.

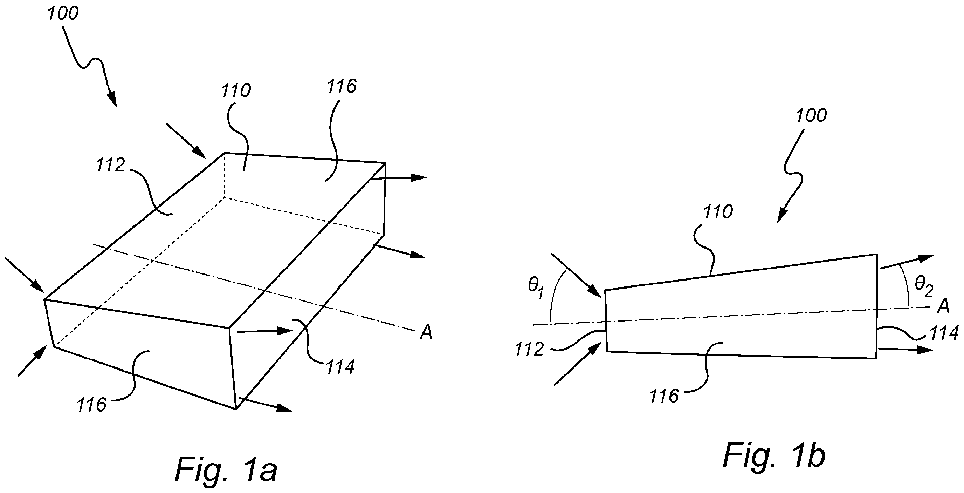

Fig. 1 a illustrates a light transmission system 100 for delivering light to a Raman spectrometer (not illustrated in the present figure), according to an embodiment of the inventive concept. The light transmission system 100 comprises a homogenizer 110 of a solid, transparent material. The homogenizer 110 comprises an entrance surface 112 and an exit surface 114. The homogenizer defines an optical path in a direction of a central axis A of the homogenizer, from the entrance surface 112 to the exit surface 114. Further, the homogenizer 110 comprises four side surfaces 116.

Light entering the homogenizer 110 through the entrance surface 112 may propagate to the exit surface 114 of the homogenizer 110, either passing directly from the entrance surface 112 to the exit surface 114, or via one or more reflections in the side surfaces 116. In the present embodiment reflections in the side surfaces 116 rely on total internal reflection of light. However, to a person skilled in the art it is equally conceivable that reflections in the side surfaces 116 may be a result of a reflective coating provided on the side surfaces 116 or a combination of the above.

In the present embodiment, the width of the entrance surface 112 is equal to the width of the exit surface 114. However, the height of the entrance surface 112 is smaller than the height of the exit surface 114. In other words, the height of the homogenizer increases when following the propagation of light along the central axis A.

Fig. 1b illustrates a side-view of the homogenizer 110 of the light transmission system 100. Light entering the homogenizer 110 at the entrance surface 112 has an entrance divergence angle θ₁ in the height direction, and light exiting the homogenizer 110 at the exit surface 114 has an exit divergence angle θ₂ in the height direction. As a consequence of the increasing height of the homogenizer 110 along the direction of light propagation through the homogenizer 110, the divergence is reduced such that the exit divergence angle θ₂ in the height direction is smaller than the entrance divergence angle θ₁ in the height direction. The light exiting the homogenizer 110 is to be delivered to a Raman spectrometer. By the reduction of divergence described herein, it may be ensured that the divergence angle of light delivered to the Raman spectrometer falls within an acceptance angle of a detector in the Raman spectrometer such that most, and possibly all, Raman light is coupled to the detector in the Raman spectrometer.

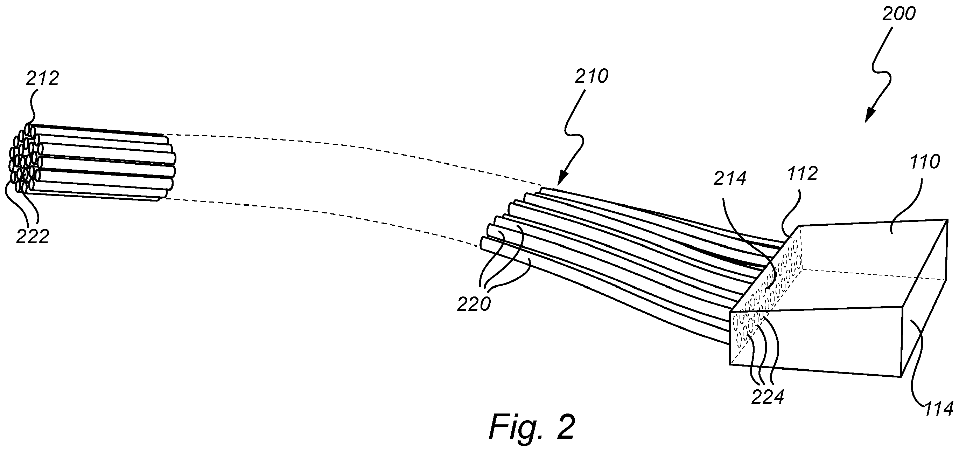

Fig. 2 illustrates a light transmission system 200 for delivering light to a Raman spectrometer (not illustrated in the present figure), according to an embodiment of the inventive concept. The light transmission system 200 comprises the homogenizer 110 and a bundle 210 of optical fibers 220. Each of the optical fibers 220 in the bundle 210 comprise a receiving end 222 and a transmitting end 224.

In the present embodiment, the receiving ends 222 of the optical fibers 220 are arranged in a circular configuration forming a circular receiving end 212 of the bundle 210. The receiving end 212 of the bundle 210 is configured to match a cross-sectional shape of Raman light from an optical head in which Raman light is collected and projected towards the receiving end 212 of the bundle 210, such that all Raman light projected towards the receiving end 212 falls within the circular configuration of the ends 222 of the optical fibers 220, whereby all Raman light may potentially be coupled into the bundle 210 of optical fibers 220.

In the present embodiment, the transmitting ends 224 of the optical fibers 220 are arranged in a rectangular configuration forming a rectangular transmitting end 214 of the bundle 210. The transmitting end 214 of the bundle 210 is configured to match the shape of the entrance surface 112 of the homogenizer 110, such that all the transmitting ends 224 of the optical fibers 220 are arranged within the shape of the entrance surface 112. In the present manner all Raman light may potentially be coupled from the bundle 210 of optical fibers 220 into the homogenizer 110.

In the present arrangement, the ends 224 of the optical fibers 220 are attached to the entrance surface 112 of the homogenizer 110 by means of a glue with a refractive index matching that of the materials of the optical fibers 220 and the homogenizer 110. However, also other means for arranging the transmitting ends 224 of the optical fibers 220 in alignment with the entrance surface 112 of the homogenizer 110 are conceivable, such as mechanically clamping the parts together.

By the present arrangement the distribution of Raman light may be reshaped between the optical head and the Raman spectrometer. In this manner, a more flexible light transmission system 200 may be provided, since it allows for combinations of optical heads and Raman spectrometers to be made, that would otherwise not be possible due to mismatch of optical interfaces intended for coupling light between the two units.

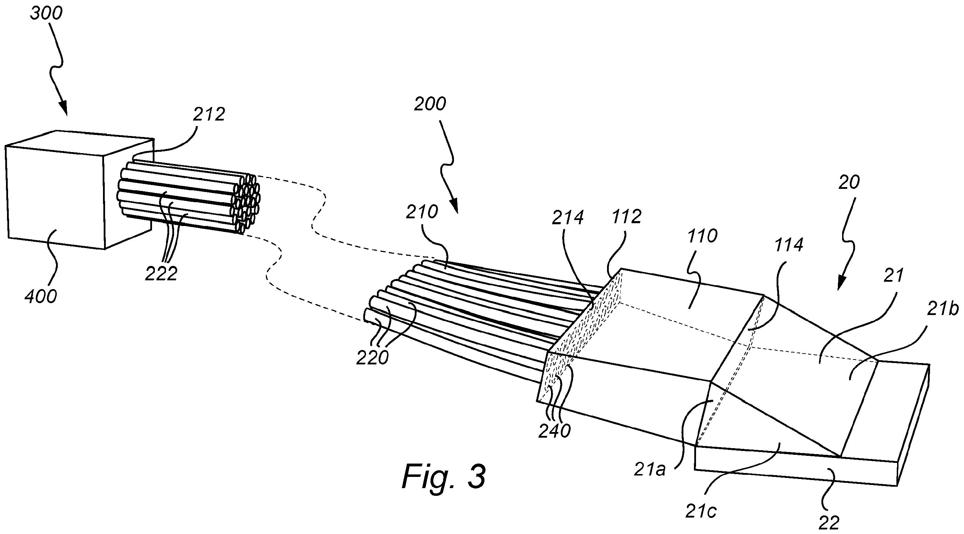

Fig. 3 illustrates an illumination and light collection system 300 for a Raman spectrometer 20, according to an embodiment of the inventive concept. The illumination and light collection system 300 comprises an optical head 400 and a light transmission system 200. The light transmission system 200 comprises a bundle 210 of optical fibers 220 and a homogenizer 110. In the present example, the exit surface 114 of the homogenizer is optically coupled to a Raman spectrometer 20, the Raman spectrometer 20 comprising a beam shaper 21 and a spectrometer chip 22.

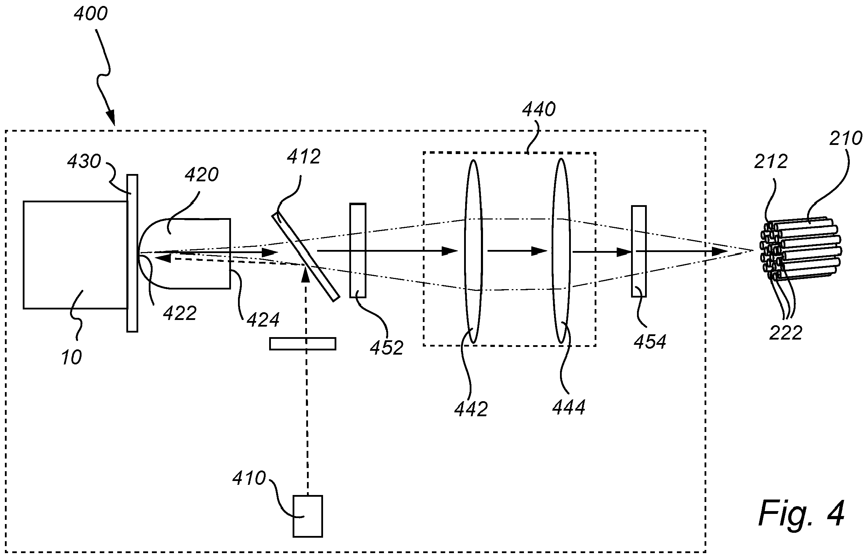

The optical head 400 is configured for illuminating a sample with excitation light and the sample will consequently emit Raman light. The details of the optical head 400 will be described in relation to Fig. 4.

The Raman light is coupled from the optical head 400 into circular receiving end 212 of the bundle 210 of optical fibers 220, in which the Raman light propagates through the optical fibers 220 to the rectangular transmitting end 214 of the bundle 210 of optical fibers 220. At the transmitting end 224 the Raman light is coupled to the entrance surface 112 of the homogenizer 110 and continues propagation through the homogenizer 110 to the exit surface 114.

In the present arrangement, the Raman spectrometer 20 is of the type described in EP2913663, comprising a beam shaper 21 for distributing collimated light over a discrete number of line shaped fields, and a spectrometer chip 22 wherein the spectrometer chip 22 is adapted for processing the light in a discrete number of line shaped fields coming from the beam shaper 21. The homogenizer 110 is made of a material with an index of refraction matching that of the beam shaper 21, in order to minimize reflection and refraction in the interface between the components. Further, the exit surface 114 is attached to the first surface 21 a of the beam shaper by means of a glue with a refractive index matching that of the materials of the homogenizer 110 and the beam shaper 21. However, also other means for arranging the entrance surface 112 of the homogenizer 110 in alignment and optically coupled to the first surface 21 a of the beam shaper 21 are conceivable, such as mechanically clamping the parts together.

The Raman light from the homogenizer 110 reaches the Raman spectrometer 20 with a high angle of incidence with respect to a normal of the surface of the spectrometer chip 22. In the present arrangement, the angle of incidence is typically in the range of 80-85%, however, another angle of incidence within another range is also conceivable. From the exit surface 114 of the homogenizer 110, the Raman light is transmitted to the Raman spectrometer 20. The exit surface 114 of the homogenizer 110 is optically coupled to a first surface 21 a of the beam shaper 21 such that the Raman light in the homogenizer 110 propagates though the first surface 21a and into the beam shaper 21.

Depending on the direction of individual light rays, Raman light may reach the third surface 21c of the beam shaper 21 either by propagating directly from the first surface 21a to the third surface 21c, or by propagating from the first surface 21a to a second surface 21b in which light is reflected to propagate to the third surface 21c. The third surface 21c is facing the spectrometer chip 22, and it is through the third surface 21c that the Raman light reaches the spectrometer chip 22. The third surface 21c is not a planar surface, but presents a saw-tooth-like structure configured for distributing Raman light over a discrete number of line shaped fields as the Raman light leaves the beam shaper 21. The spectrometer chip 22 is adapted for processing the Raman light in a discrete number of line shaped fields coming from the beam shaper 21, in that the spectrometer chip comprises a plurality of detectors arranged along a number of lines on the spectrometer chip 22. The Raman spectrometer is described in further detail in EP2913663, which is incorporated herein by reference.

The detectors on the spectrometer chip 22 present a limited acceptance angle within which the detectors may receive, and thus detect, light. Further, the acceptance angle in the direction along a line of detectors may be different from the acceptance angle in the direction across a line of detectors. In the present example, the acceptance angle across a line of detectors is +/- 7.5 degrees (in air), and the acceptance angle along a line of detectors is +/- 30 degrees. However, due to the symmetry of the optical fibers 220, the Raman light transmitted out of the transmitting end 214 of the bundle 210 of optical fibers 220 is 24 degrees in all directions, in the present example. Hence, it is of importance that the homogenizer 110 efficiently reduces the divergence angle of the Raman light from the bundle 210 of fibers 220 in at least one direction. The direction across a line of detectors correspond to the height direction of the homogenizer 110 in the present example, and the homogenizer is thus configured to reduce the divergence angle in the height direction from 24 degrees to at least 7.5 degrees, in order for the detectors to be able to receive and detect all Raman light. By way of example, in order for the homogenizer to reduce the divergence by a factor of 4, the exit width of the exit surface 114 should be 4 times larger than the entrance height of the entrance surface 112.

In case where the cross-section of the output of the optical head 400 and the input of the Raman spectrometer 20 have different geometrical shapes, it is also important that the Raman light field is reshaped, to avoid losses. In the present example, the optical head 400 has a circular output, whereas the Raman spectrometer 20 has a rectangular input. By means of the light transmission system 200 comprising a bundle 210 of optical fibers 220 with a circular receiving end 212 and a rectangular transmitting end 214, the difference is bridged such that the Raman light field is reshaped to fit the Raman spectrometer 20 without significant losses of Raman light.

Fig. 4 illustrates the details of the optical head 400 for exciting a sample 10, the sample consequently emitting Raman light, and for collecting and coupling the Raman light into the light transmission system 200 delivering light to the Raman spectrometer 20, according to an embodiment of the inventive concept.

In the present embodiment, the source of excitation light is a laser and positioned external to the optical head 400. Excitation light from the laser is coupled into the optical head 400 via an optical fiber optically coupled to an excitation fiber input port 410. Excitation light from the input port is directed to a dichroic mirror 412. Excitation light is represented in Fig. 4 by dashed-line-arrows. The dichroic mirror is provided with a reflective coating configured to reflect light at the excitation wavelength and to transmit light at least at wavelengths longer than the excitation wavelength, such that Stokes shifted Raman light may efficiently be transmitted through the dichroic mirror.

In the present example, the excitation light has a wavelength of 785 nm. With an excitation wavelength of 785 nm, the wavelength range for detection of Raman light is approximately 830 nm to 920 nm. The reflective coating on the dichroic mirror 412 is thus configured to efficiently transmit light in at least this wavelength range. The wavelengths mentioned here are examples of a specific embodiment, however it is realized by a person skilled in the art that also other excitation wavelengths may be used, and therefore also other ranges of detection may be possible.

The excitation light reflected by the dichroic mirror 412 is directed into a collimating reflector 420 comprising a small entrance 422 and a large exit 424. The excitation light is directed through the large exit 424 and the small entrance 422 and through a transparent front glass 430 of the optical head 400. A sample 10 is positioned on the other side of the front glass 430, such that the sample is illuminated by the excitation light. Subsequently to being illuminated by excitation light, the illuminated part of the sample 10 emits Raman light in substantially all directions. Raman light is here represented by solid-line-arrows.

In the present example, the collimating reflector 420 is a compound parabolic concentrator. The collimating reflector 420 is a hollow optical component provided with a reflective coating with high reflectivity within at least the wavelength range to be detected. By way of example, a reflective coating of Gold may be provided on the collimating reflector 420, however, also other materials are conceivable for providing a high reflective coating. The collimating reflector 420 has a large acceptance angle at the small entrance 422 and a smaller angular divergence at the large exit 424, such that the Raman light emitted from the sample 10 into a hemisphere with a solid angle of 2π srad may be collected by the collimating reflector 420 through the small entrance 422. The collected Raman light is subsequently collimated to a smaller angular divergence and directed out through the large exit 424 and through the dichroic mirror 412 along an optical collection path. The collimating reflector is configured such that the Raman light exiting the large exit 424 has a divergence angle which is not larger than the acceptance angle of receiving ends 222 of the optical fibers 220. The acceptance angle of the receiving ends 222 of the fibers 220 is typically not larger than 30 degrees, and in the present example the acceptance angle is 24 degrees. The present embodiment provides an effective manner of collecting Raman light from a large solid angle, thereby ensuring a good signal-to-noise ratio.

The optical head further comprises projection optics 440, in the present example being a first lens 442 and a second lens 444. The projection optics image the large exit 424 of the collimating reflector 420 onto the receiving end 212 of the bundle 210 of optical fibers 220. The combination of the collimating reflector 420 and the projection optics 440 ensures that Raman light is efficiently collected and coupled into the bundle 210 of optical fibers 220.

In the optical collection path from the collimating reflector 420 to the receiving end 212 of the bundle 210 of optical fibers 220 is also arranged a first filter set 452 and a second filter set 454. Each of the filter sets 452, 454 comprise an interference filter configured to block light at the excitation wavelength reaching the filter with an angle of incidence, with respect to a normal of the interference filter, smaller than or equal to at least the acceptance angle of the optical fibers 220. Excitation light in the optical collection path may originate from reflections of excitation light in optical components, in inner walls of the optical head 400 or from light scattering off of the sample 10. By the combination of optical fibers 220 and interference filters configured to block excitation light of at least all angles up to the acceptance angle of the optical fibers 220, an effective manner for filtering out excitation light from the optical path of Raman light may be provided.

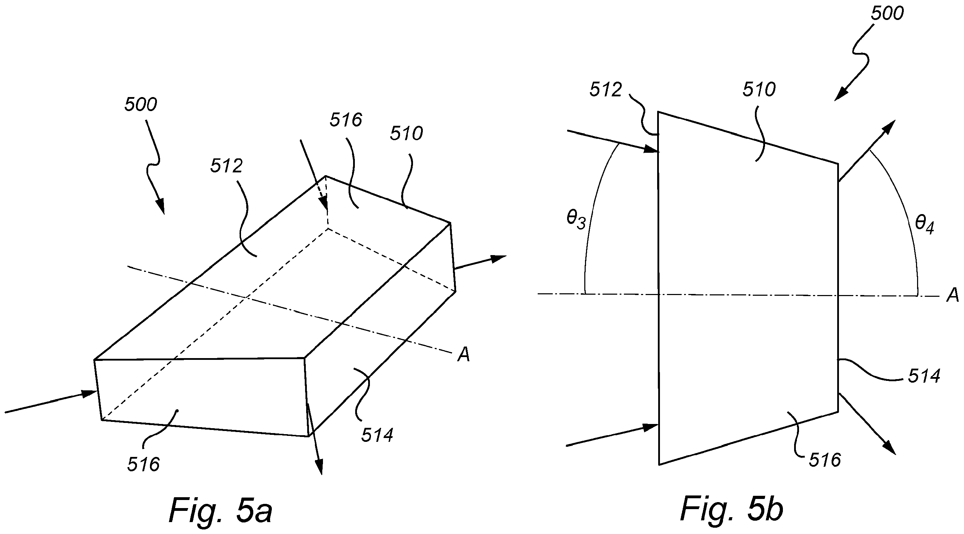

Fig. 5a illustrates a homogenizer 510, according to an embodiment of the inventive concept. The homogenizer 510 is of a solid, transparent material. The homogenizer 510 comprises an entrance surface 512 and an exit surface 514. The homogenizer defines an optical path in a direction of a central axis A of the homogenizer, from the entrance surface 512 to the exit surface 514. Further, the homogenizer 510 comprises four side surfaces 516.

Light entering the homogenizer 510 through the entrance surface 512 may propagate to the exit surface 514 of the homogenizer 510, either passing directly from the entrance surface 512 to the exit surface 514, or via one or more reflections in the side surfaces 516. In the present embodiment reflections in the side surfaces 516 rely on total internal reflection of light. However, it is realized by a person skilled in the art that reflections in the side surfaces 516 may be a result of a reflective coating provided on the side surfaces 516.

Similarly to what has been previously described for homogenizer 110, the height of the homogenizer 510 increases when following the propagation of light along the central axis A, resulting in a smaller divergence angle in the height direction for light at the exit surface 514 compared to at the entrance surface 512. Additionally, the width of the entrance surface 512 is larger than the width of the exit surface 514. In other words, the width of the homogenizer decreases when following the propagation of light along the central axis A.

Fig. 5b illustrates a top-view of the homogenizer 510. Light entering the homogenizer 510 at the entrance surface 512 has an entrance divergence angle θ₃ in the width direction, and light exiting the homogenizer 510 at the exit surface 514 has an exit divergence angle θ₄ in the width direction. As a consequence of the decreasing width of the homogenizer 510 along the direction of light propagation through the homogenizer 510, the divergence is increased such that the exit divergence angle θ₄ in the width direction is larger than the entrance divergence angle θ₃ in the width direction. By replacing the homogenizer 110 by the homogenizer 510 in any of the previously described light transmission systems 100, 200, a light transmission system that utilizes a larger portion of the acceptance angle in the width direction of the detectors on the spectrometer chip 22 may be provided.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A light transmission system (100, 200) for delivering light to a Raman spectrometer (20), said light transmission system (100, 200) comprising:
a homogenizer (110, 510) comprising an entrance surface (112, 512) and an exit surface (114, 514), the entrance surface (112, 512) having an entrance height and an entrance width, wherein the entrance height and the entrance width are of different sizes, the exit surface (114, 514) having an exit height and an exit width, wherein the exit height and the exit width are of different sizes, and wherein the exit height is of a larger size than the entrance height; and
wherein the homogenizer (110, 510) defines an optical path for propagation of light from the entrance surface (112, 512) to the exit surface (114, 514);
wherein the homogenizer (110, 510) is configured to receive, at the entrance surface (112, 512), light from a bundle (210) of optical fibers (220) and wherein each fiber (220) in the bundle (210) of fibers (220) defines an entrance divergence angle of light received at the entrance surface (112, 512); and
wherein the homogenizer (110, 510) is configured to transmit light such that an exit divergence angle of light exiting at the exit surface (114, 514), in a plane perpendicular to the exit surface (114, 514) and parallel with a direction of the exit height, is smaller than the entrance divergence angle of light, in a plane perpendicular to the entrance surface (112, 512) and parallel with a direction of the entrance height, such that the exit divergence angle is adapted to an acceptance angle of a detector of the Raman spectrometer (20).

2. The light transmission system (100, 200) according to claim 1, further comprising a bundle (210) of optical fibers (220), each optical fiber (220) of the bundle (210) of optical fibers (220) comprising a transmitting end (224), wherein the transmitting ends (224) of the optical fibers (220) are arranged in a configuration adapted to a shape of the entrance surface (112, 512) such that light from each optical fiber (220) is received by the homogenizer (110, 510) at the entrance surface (112, 512).

3. The light transmission system (100, 200) according to claim 2, wherein each optical fiber (220) of the bundle (210) of optical fibers (220) further comprises a receiving end (222) configured to receive light, and wherein the receiving ends (222) of the optical fibers (220) are arranged in a circular configuration.

4. The light transmission system (100, 200) according to claim 3, wherein the transmitting ends (224) of the optical fibers (220) and the receiving ends (222) of the optical fibers (220) are arranged in different configurations.

5. The light transmission system (100, 200) according to any of the preceding claims, wherein the homogenizer (110, 510) is configured to provide an exit divergence angle which is less than or equal to 50% of the entrance divergence angle, and preferably less than or equal to 35% of the entrance divergence angle.

6. The light transmission system (100, 200) according to any of the preceding claims, wherein the homogenizer (110, 510) further comprises one or more side surfaces (116, 516), and wherein the one or more side surfaces (116, 516) are configured so as to allow propagation of light from the entrance surface (112, 512) to the exit surface (114, 514) by total internal reflection of light at the one or more side surfaces (116, 516).

7. The light transmission system (100, 200) according to any of the preceding claims, wherein at least one of the entrance surface (112, 512) and the exit surface (114, 514) of the homogenizer (110, 510) is provided with a glue, said glue having a refractive index which is equal to a refractive index of the homogenizer (110, 510), such that refraction of light is minimized when light passes between the homogenizer (110, 510) and the glue.

8. The light transmission system (100, 200) according to any of the preceding claims, wherein the homogenizer (110, 510) has a shape of a trapezoidal prism.

9. The light transmission system (100, 200) according to any one of claims 1 to 7, wherein the homogenizer (110, 510) is tapered in a direction of the width towards the exit surface (114, 514), such that the entrance width is of a larger size than the exit width, the homogenizer (110, 510) thereby being configured to transmit light such that an exit divergence angle of light exiting at the exit surface (114, 514), in a plane perpendicular to the exit surface (114, 514) and parallel with a direction of the exit width, is larger than the entrance divergence angle of light, in a plane perpendicular to the entrance surface (112, 512) and parallel with a direction of the entrance width, such that the exit divergence angle is further adapted to the acceptance angle of the detector of the Raman spectrometer (20).

10. An illumination and light collection system (300) for a Raman spectrometer (20), the illumination and light collection system (300) comprising:
a light transmission system (100, 200) according to any of the preceding claims;
an optical head (400), optically coupled to the light transmission system (100, 200), and configured for guiding excitation light to a sample (10) from which Raman light is consequently emitted, for collecting the Raman light and directing the collected Raman light along an optical collection path, for filtering out the excitation light from the optical collection path, and for coupling the collected Raman light in the optical collection path into the light transmission system (100, 200).

11. The illumination and light collection system (300) according to claim 10, wherein the optical head (400) further comprises a collimating reflector (420) arranged to collect the Raman light emitted from a sample (10) into a hemisphere with a solid angle of 2π srad and directing the collected Raman light along the optical collection path.

12. The illumination and light collection system (300) according to claim 11, wherein the collimating reflector (420) is a compound parabolic concentrator, said compound parabolic concentrator being hollow and coated with a material of high reflectivity for at least one wavelength range.

13. The illumination and light collection system (300) according to any of claims 11 to 12, wherein the optical head (400) further comprises projection optics (440) arranged for projecting the Raman light, collected by the collimating reflector (420), along the optical collection path and for coupling the collected Raman light into the light transmission system (100, 200), such that a divergence angle of the collected Raman light, when reaching the light transmission system (100, 200), is smaller than or equal to an acceptance angle of the light transmission system (100, 200).

14. The illumination and light collection system (300) according to any one of claims 10 to 13 comprising the light transmission system (100, 200) according to claim 2 or 4, wherein the optical head (400) further comprises at least one filter set (452, 454) for filtering out excitation light from the optical collection path, the at least one filter set (452, 454) comprising an interference filter configured to block excitation light having an angle of incidence, with respect to a normal of the interference filter, smaller than or equal to at least an acceptance angle of the optical fibers (220).

15. The illumination and light collection system (300) according to any one of claims 10 to 14, wherein the optical head (400) is configured for guiding excitation light such that excitation light reaches the sample (10) from a side being the same as a side from which Raman light is collected.
